# EUROPEAN PATENT APPLICATION

(11) **EP 1 814 284 A1**
(43) Date of publication of application: **01.08.2007**
(21) Application number: 07000717.4
(22) Date of filing: 15.01.2007
(51) Int. Cl.: H04M 1/00, G02B 27/01, G02F 1/1335

(54) **Liquid crystal display device and head-up display using it**

(30) Priority: 19.01.2006 JP 2006011305; 31.10.2006 JP 2006295533
(71) Applicant: Epson Imaging Devices Corporation, Azumino-shi Nagano 399-8285 (JP)
(72) Inventor: Noguchi, Satoshi Sanyo Epson Imaging Devices Corp., Azumino-shi Nagano 399-8285 (JP); Kinugawa, Tomokatsu Sanyo Epson Imaging Devices, Azumino-shi Nagano 399-8285 (JP)
(74) Representative: Glawe, Delfs, Moll

(57) **Abstract**

Provided is a liquid crystal display device that can be produced at low costs, can achieve miniaturization, and can offer clear virtual images. The liquid crystal display device (1) is provided with: a frame body (3) that is so disposed as to cover a top face of a liquid crystal cell (2), that has a first opening so formed as to face the top face of the liquid crystal cell, and that has a picture frame-shaped member (12) formed around the first opening; a frame (4) that is fixed to the frame body and that has a second opening so formed as to face a back face of the liquid crystal cell; and a light source (6) that illuminates the liquid crystal cell via the second opening of the frame. Here, a top face of the picture frame-shaped member of the frame body is so designed that light is diffusely reflected therefrom.

## Description

### BACKGROUND OF THE INVENTION

### 1. Field of the Invention

The present invention relates to a liquid crystal display device and a head-up display using it.

### 2. Description of Related Art

There have conventionally been known head-up displays that display a virtual image indicating the speed or a virtual image for car navigation on the windshield of a vehicle. For example, such a head-up display is disclosed in JP-A-2005-082103. In the head-up display disclosed in JP-A-2005-082103, an image from the liquid crystal projector is projected onto the screen, and the projected image is then reflected on the windshield via the reflecting mirror. This allows the viewer to visually identify the virtual image projected via the liquid crystal projector as an image superimposed on the landscape.

However, the conventional head-up display described above has the disadvantage that the use of the liquid crystal projector having a dichroic mirror or the like leads to an undesirable increase in the cost as well as in the size of the head-up display. To overcome this disadvantage, there have been conventionally proposed head-up displays using, instead of the liquid crystal projector, a liquid crystal display panel that displays an image. For example, such a head-up display is disclosed in JP-A-2005-315931. In the head-up display disclosed in JP-A-2005-315931, a liquid crystal display panel is disposed in the dashboard of a vehicle, and a liquid crystal cell of the liquid crystal display panel is illuminated by a light-emitting diode placed behind the liquid crystal cell, such that light emitted from the light-emitting diode passes therethrough. The light illuminating the liquid crystal cell passes through a polarizing member, and is then enlarged and reflected by a concave mirror toward the outside of the dashboard. Then, the resultant light is reflected from the windshield of the vehicle. This permits the viewer to visually identify the virtual image displayed by the liquid crystal display panel as an image superimposed on the landscape.

The head-up display disclosed in JP-A-2005-315931 has a light-shielding wall for preventing external light from directly entering the liquid crystal display panel. However, in the case of the head-up display disclosed in JP-A-2005-315931, the external light may be reflected by the concave mirror and then illuminate the liquid crystal display panel. In such a case, blocking of the passage of the external light makes it impossible to form the virtual image. Therefore, the passage of the external light should not be blocked.

If the external light is reflected by the concave mirror and then enters the liquid crystal display panel, the external light illuminates not only the liquid crystal cell but also the frame body that supports the liquid crystal cell. This disadvantageously leads to an increase in brightness of the frame body, blurring the virtual image to be viewed by the viewer. Furthermore, if the external light is intense, a whitish virtual image may be formed. Moreover, if a label that is likely to reflect light is affixed to the frame body, the label is brightly illuminated, blurring the virtual image to be viewed by the viewer. Still further, assume that a flexible printed board is disposed near the frame body. Then, if a label is affixed to the flexible printed board near the frame body, the virtual image to be viewed by the viewer becomes blurred.

It is well known that at low temperature the liquid crystal display panels suffer from a delay in transition and hence a delay in display response. In particular, the liquid crystal display panel designed to be mounted on a vehicle is expected to be used at low temperature. Thus, as disclosed in JP-A-2005-345974, there have been proposed liquid crystal display panels that are heated by a heater. However, at extremely low temperature, using a heater is not enough. It is necessary to heat the liquid crystal display panel more effectively.

### SUMMARY OF THE INVENTION

In view of the conventionally experienced disadvantages described above, one object of the present invention is to provide a liquid crystal display device that can be produced at low costs, can achieve miniaturization, and can offer clear virtual images.

Another object of the present invention is to provide a head-up display that can be produced at low costs, can achieve miniaturization, and can offer clear virtual images.

To achieve the above objects, according to one aspect of the present invention, a liquid crystal display device is provided with: a liquid crystal cell; a frame body that is made of resin and is so disposed as to cover a top face of the liquid crystal cell, that has a first opening so formed as to face the top face of the liquid crystal cell, and that has a picture frame-shaped member formed around the first opening; a frame that is fixed to the frame body, that has a second opening so formed as to face a back face of the liquid crystal cell, and that supports the liquid crystal cell; and a light source that illuminates the liquid crystal cell via the second opening of the frame. Here, a top face of the picture frame-shaped member of the frame body is so designed that light is diffusely reflected therefrom.

Since the liquid crystal display device is constructed as described above, external light entering the top face of the picture frame-shaped member of the frame body is diffusely reflected therefrom. This makes it possible to prevent the external light from being reflected only in a certain direction. As a result, in a case where the liquid crystal display device is used in a head-up display, even when the external light is reflected from the top face of the picture frame-shaped member of the frame body, it is possible to reduce the amount of reflected light entering a small reflecting mirror of the head-up display. This helps reduce the amount of reflected light traveling from the reflecting mirror of the head-up display toward a combiner (windshield), and thereby prevent a virtual image that is visually identified by the viewer from being blurred. That is, it is possible to prevent a virtual image corresponding to the picture frame-shaped member of the frame body from being visually identified by the viewer. Moreover, unlike a liquid crystal projector having a dichroic mirror or the like, this contributes to cost reduction and miniaturization.

Preferably, in the liquid crystal display device described above, the first opening of the frame body has inclined planes formed in such a way that the first opening becomes gradually larger from a back face toward a top face of the frame body, and the inclined planes of the first opening of the frame body are so designed that light is diffusely reflected therefrom. With this construction, even when the external light enters the inclined planes of the first opening of the frame body, the external light is diffusely reflected therefrom. This makes it possible to prevent the external light from being reflected only in a certain direction.

In this case, preferably, grain finish is applied to the top face of the picture frame-shaped member of the frame body and to the inclined planes of the first opening of the frame body, such that diffusely reflecting surfaces are formed therein. With this construction, it is possible to form diffusely reflecting surfaces having irregular elevations and depressions in the top face of the picture frame-shaped member of the frame body and in the inclined planes of the first opening of the frame body. As a result, even when the external light enters the top face of the picture frame-shaped member of the frame body and the inclined planes of the first opening, the external light is diffusely reflected therefrom without fail. This ensures that the external light is prevented from being reflected only in a certain direction. Incidentally, the same advantage can be achieved by applying a matte coating to the top face of the picture frame-shaped member of the frame body and to the inclined planes of the first opening of the frame body. However, in the case of mass production, using a grained mold when producing the frame body is preferable to applying a matte coating because the former method requires fewer production steps than the latter method, making it possible to produce the frame body at lower costs.

Preferably, the liquid crystal display device described above is further provided with a flexible printed circuit board that is connected, at one end thereof, near an edge of the liquid crystal cell and is exposed, at the other end thereof, outside of the frame body and the frame. Here, a label is affixed to a predetermined part of an exposed region of the flexible printed circuit board. With this construction, by arranging the exposed region of the flexible printed circuit board so as not to be exposed to the external light, it is possible to prevent the external light from being reflected by the label only in a certain direction. By contrast, in a conventional example, since a label is affixed to a picture frame-shaped member of a frame body, the external light is reflected by the label only in a certain direction. This undesirably allows the viewer to visually identify a virtual image corresponding to the label.

Preferably, in the liquid crystal display device described above, the frame is made of metal. With this construction, it is possible to increase thermal conductivity of the frame, and thereby facilitate conduction of heat (including heat of the dashboard when the liquid crystal display device is designed to be mounted on a vehicle) of the light source to the liquid crystal cell. This causes a rapid rise in temperature of the liquid crystal cell, and thereby makes transition and display response faster. In the case of the liquid crystal display device designed to be mounted on a vehicle, this is particularly effective when the heater provided inside the vehicle starts to warm the interior. If there is a need to make a frame have a diffusely reflecting surface, it is necessary to apply an expensive matte coating thereto because grain finish cannot be applied to a metal frame that is to be subjected to sheet metal processing. Therefore, if there is a need to make a frame have a diffusely reflecting surface, it is preferable to use a resin frame to which inexpensive grain finish can be applied. However, in the construction in which the frame is arranged behind the liquid crystal cell, the external light does not enter the frame, causing no problem in using a metal frame having no diffusely reflecting surface.

According to another aspect of the present invention, a head-up display is provided with a liquid crystal display device, an optical component that changes a traveling direction of a displayed image generated by the liquid crystal display device, and a combiner that reflects the displayed image from the optical component and displays a virtual image. Here, the liquid crystal display device includes a liquid crystal cell, a frame body that is made of resin and is so disposed as to cover a top face of the liquid crystal cell, that has a first opening so formed as to face the top face of the liquid crystal cell, and that has a picture frame-shaped member formed around the first opening, a frame that is fixed to the frame body, that has a second opening so formed as to face a back face of the liquid crystal cell, and that supports the liquid crystal cell, and a light source that illuminates the liquid crystal cell via the second opening of the frame. A top face of the picture frame-shaped member of the frame body is so designed that light is diffusely reflected therefrom.

Since the head-up display is constructed as described above, external light entering the top face of the picture frame-shaped member of the frame body is diffusely reflected therefrom, making it possible to prevent the external light from being reflected only in a certain direction. As a result, even when the external light is reflected from the top face of the picture frame-shaped member of the frame body, it is possible to reduce the amount of reflected light entering a small reflecting mirror of the head-up display. This helps reduce the amount of reflected light traveling from the reflecting mirror of the head-up display toward a combiner (windshield), and thereby prevent a virtual image that is visually identified by the viewer from being blurred. That is, it is possible to prevent a virtual image corresponding to the picture frame-shaped member of the frame body from being visually identified by the viewer. Moreover, unlike a case where a liquid crystal projector having a dichroic mirror or the like is used, it is possible to achieve cost reduction and miniaturization.

Preferably, in the head-up display described above, the first opening of the frame body has inclined planes formed in such a way that the first opening becomes gradually larger from a back face toward a top face of the frame body, and the inclined planes of the first opening of the frame body are so designed that light is diffusely reflected therefrom. With this construction, even when the external light enters the inclined planes of the first opening of the frame body, the external light is diffusely reflected therefrom. This helps prevent the external light from being reflected only in a certain direction.

In this case, preferably, grain finish is applied to the top face of the picture frame-shaped member of the frame body and to the inclined planes of the first opening of the frame body, such that diffusely reflecting surfaces are formed therein. With this construction, it is possible to form diffusely reflecting surfaces having irregular elevations and depressions in the top face of the picture frame-shaped member of the frame body and in the inclined planes of the first opening of the frame body. As a result, even when the external light enters the top face of the picture frame-shaped member of the frame body and the inclined planes of the first opening, the external light is diffusely reflected therefrom without fail. This ensures that the external light is prevented from being reflected only in a certain direction. Incidentally, the same advantage can be achieved by applying a matte coating to the top face of the picture frame-shaped member of the frame body and to the inclined planes of the first opening of the frame body. However, in the case of mass production, using a grained mold when producing the frame body is preferable to applying a matte coating because the former method requires fewer production steps than the latter method, making it possible to produce the frame body at lower costs.

Preferably, in the head-up display described above, the liquid crystal display device further includes a flexible printed circuit board that is connected, at one end thereof, near an edge of the liquid crystal cell and is exposed, at the other end thereof, outside of the frame body and the frame, and a label is affixed to a predetermined part of an exposed region of the flexible printed circuit board. With this construction, by arranging the exposed region of the flexible printed circuit board so as not to be exposed to the external light, it is possible to prevent the external light from being reflected by the label only in a certain direction. By contrast, in a conventional example, since a label is affixed to a picture frame-shaped member of a frame body, the external light is reflected by the label only in a certain direction. This undesirably allows the viewer to visually identify a virtual image corresponding to the label.

Preferably, in the head-up display described above, the frame is made of metal. With this construction, it is possible to increase thermal conductivity of the frame, and thereby facilitate conduction of heat (including heat of the dashboard when the liquid crystal display device is designed to be mounted on a vehicle) of the light source to the liquid crystal cell. This causes a rapid rise in temperature of the liquid crystal cell, and thereby makes transition and display response faster. In the case of the liquid crystal display device designed to be mounted on a vehicle, this is particularly effective when the heater provided inside the vehicle starts to warm the interior. If there is a need to make a frame have a diffusely reflecting surface, it is necessary to apply an expensive matte coating thereto because grain finish cannot be applied to a metal frame that is to be subjected to sheet metal processing. Therefore, if there is a need to make a frame have a diffusely reflecting surface, it is preferable to use a resin frame to which inexpensive grain finish can be applied. However, in the construction in which the frame is arranged behind the liquid crystal cell, the external light does not enter the frame, causing no problem in using a metal frame having no diffusely reflecting surface.

### BRIEF DESCRIPTION OF THE DRAWINGS

FIG. 1 is a front view of the liquid crystal display device of one embodiment of the present invention;
FIG. 2 is a sectional view taken on the line A1-A2 of FIG. 1;
FIG. 3 is a view from the direction indicated by arrow B shown in FIG. 1;
FIG. 4 is a sectional view taken on the line C1-C2 of FIG. 1;
FIG. 5 is a perspective view of the frame body used in the liquid crystal display device of one embodiment shown in FIG. 1;
FIG. 6 is a perspective view of the frame used in the liquid crystal display device of one embodiment shown in FIG. 1; and
FIG. 7 is a schematic view of the head-up display.

### DETAILED DESCRIPTION OF PREFERRED EMBODIMENTS

It should be understood that the embodiments presented below are simply intended to give an example of a liquid crystal display device that embodies the technical idea of the present invention, and therefore the liquid crystal display device specifically described below is not intended to limit in any way the manner in which to carry out the present invention. That is, the present invention finds wide application in the technical fields to which the appended claims are directed.

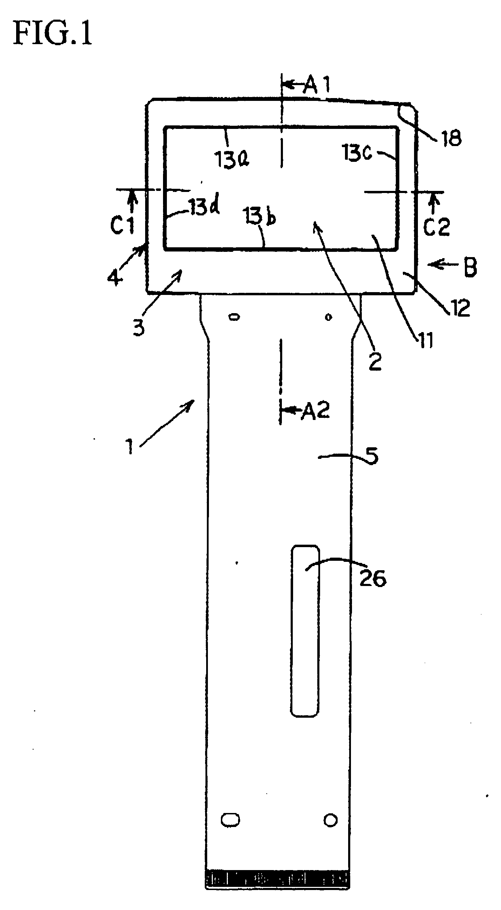

First, with reference to FIGS. 1 to 6, the structure of a liquid crystal display device 1 of this embodiment will be described.

As shown in FIGS. 1 to 6, the liquid crystal display device 1 is built with a liquid crystal cell 2, a frame body 3, a frame 4, an FPC (flexible printed circuit) board 5, a light source 6, and the like.

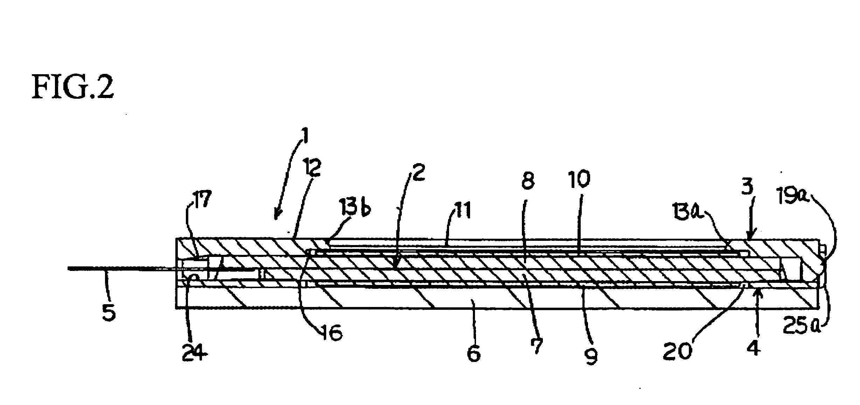

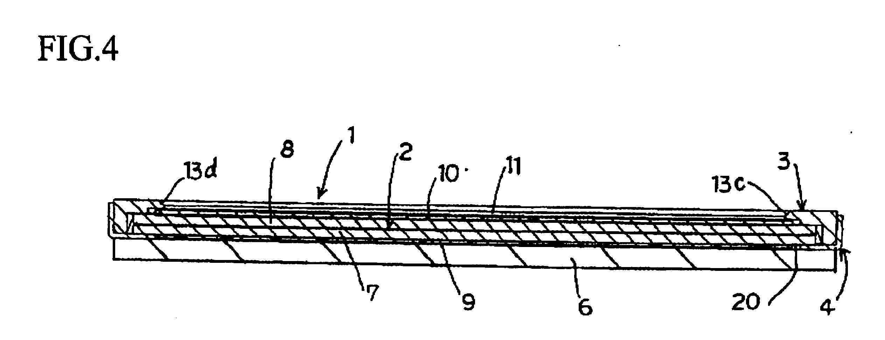

As shown in FIGS. 2 and 4, the liquid crystal cell 2 is built with a first insulating substrate 7, a second insulating substrate 8, a first polarizing plate 9, a second polarizing plate 10, and the like. The first insulating substrate 7 and the second insulating substrate 8 are bonded together at peripheral edges thereof with a sealing agent (not shown). In a space surrounded by the first insulating substrate 7, the second insulating substrate 8, and the sealing agent, liquid crystal (not shown) is sealed.

On the top face of the first insulating substrate 7 (the face thereof facing the second insulating substrate 8), R, G, and B color filters (not shown) and a black matrix (not shown) disposed between these color filters are formed. Moreover, on the top face of the color filters and the black matrix, a common electrode (not shown) is formed.

On the back face of the second insulating substrate 8 (the face thereof facing the first insulating substrate 7), a plurality of scanning electrodes (not shown) and a plurality of signal electrodes (not shown) are formed in such a way that they intersect with one another to form a matrix. Near the individual intersections of the plurality of scanning electrodes and the plurality of signal electrodes, TFTs (not shown) and pixel electrodes (not shown) are formed. The source and drain of the TFT are connected to the signal electrode and the pixel electrode respectively, and the gate of the TFT is connected to the scanning electrode.

The first polarizing plate 9 is fixed to the back face of the first insulating substrate 7 (the face thereof facing away from the second insulating substrate 8), and the second polarizing plate 10 is fixed to the top face of the second insulating substrate 8 (the face thereof facing away from the first insulating substrate 7).

The liquid crystal cell 2 (to be precise, the second insulating substrate 8) built with the above-described components (the first insulating substrate 7, the second insulating substrate 8, the first polarizing plate 9, the second polarizing plate 10, and the like) is formed, as seen from the top face side thereof, in the shape of a rectangle.

The FPC board 5 is a flexible substrate. One end of the FPC board 5 is disposed near the edge of the liquid crystal cell 2, and is electrically connected to the scanning electrodes (not shown) and to the signal electrodes (not shown).

The frame body 3 is made of resin (plastic). The frame body 3 has an opening (a first opening) 11 that is so formed as to face the top face of the liquid crystal cell 2. Around the opening 11 of the frame body 3, a picture frame-shaped member 12 is formed. As shown in FIGS. 1, 2, and 4, the opening 11 of the frame body 3 has inclined planes 13a, 13b, 13c, and 13d formed in such a way that the opening 11 becomes gradually larger from the back face toward the top face of the frame body 3.

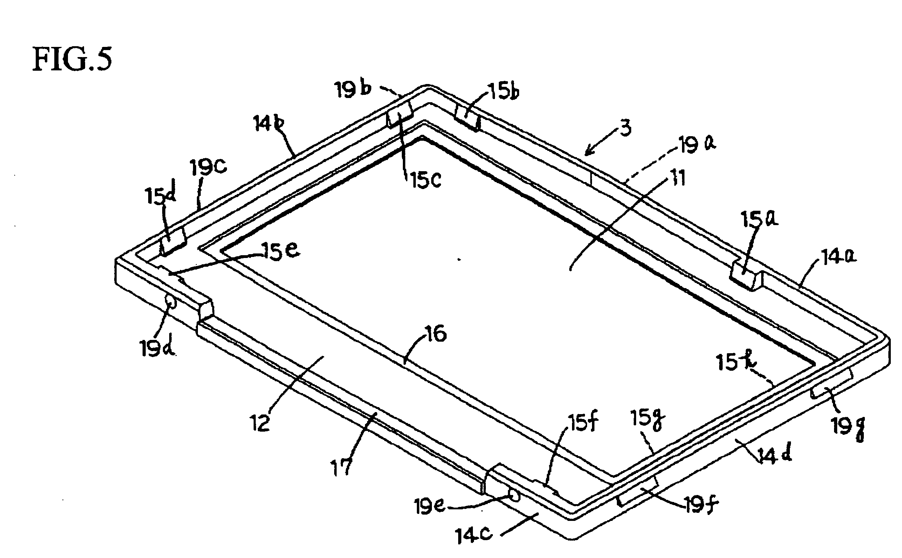

As shown in FIG. 5, the frame body 3 is substantially box-shaped, and has side portions 14a, 14b, 14c, and 14d. The side portions 14a, 14b, 14c, and 14d of the box-shaped frame body 3 have a plurality of ribs 15a, 15b, 15c, 15d, 15e, 15f, 15g, and 15h formed on the inner faces thereof. The plurality of ribs 15a, 15b, 15c, 15d, 15e, 15f, 15g, and 15h formed in the frame body 3 protrude inward, and are disposed at a distance from each other.

As shown in FIG. 5, on the back face of the picture frame-shaped member 12 of the frame body 3, a step portion 16 is formed between the picture frame-shaped member 12 and the opening 11. As shown in FIGS. 2 and 4, the step portion 16 of the frame body 3 is so formed as to be thinner than the picture frame-shaped member 12 as seen in a sectional view.

As shown in FIG. 5, a low height portion 17 is formed in the side portion 14c of the frame body 3. Furthermore, as shown in FIG. 1, in part of the side portion 14a of the frame body 3, a sloped portion 18 is formed that is sloped as seen from the top face side of the frame body 3. As shown in FIG. 5, the side portions 14a, 14b, 14c, and 14d of the frame body 3 have formed therein protrusions 19a, 19b, 19c, 19d, 19e, 19f, and 19g that protrude outward.

One distinctive feature of the frame body 3 is that the top face of the picture frame-shaped member 12 and the inclined planes 13a to 13d of the opening 11 are so designed that light is diffusely reflected therefrom.

The top face of the picture frame-shaped member 12 of the frame body 3 and the inclined planes 13a to 13d of the opening 11 are illuminated with external light reflected from a concave mirror 102 and a plane mirror 101, which will be described later. Therefore, the frame body 3 is colored black to prevent reflection of the external light. However, if the top face of the frame body 3 is shiny, the external light would be reflected therefrom in a certain direction. To prevent the external light being reflected in a certain direction, grain finish is applied to the top face of the picture frame-shaped member 12 and to the inclined planes 13a to 13d of the opening 11 that are illuminated with the external light, such that the external light is diffusely reflected therefrom. It is to be noted that a matte coating may be applied in order to diffusely reflect the external light. However, in the case of mass production, using a grained mold when producing the frame body 3 is preferable to applying a matte coating because the former method requires fewer production steps than the latter method, making it possible to produce the frame body 3 at lower costs.

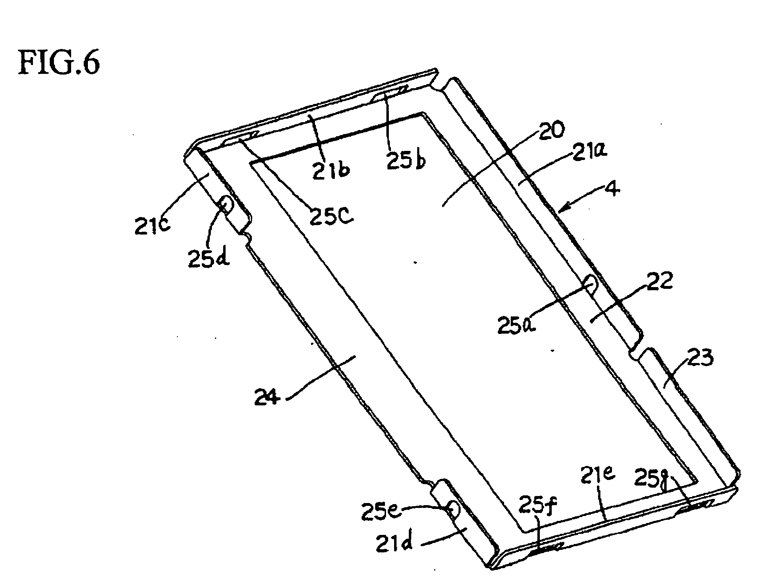

As shown in FIG. 6, the frame 4 is made of metal such as a stainless plate, and has high thermal conductivity. This facilitates conduction of heat of the light source 6, which will be described later, and a dashboard (not shown) to the liquid crystal cell 2, and thereby easily causes a rise in temperature of the liquid crystal cell 2. The rise in temperature of the liquid crystal cell 2 makes transition faster, and thereby makes display response faster. Incidentally, the frame 4 has an opening (a second opening) 20 so formed as to face the back face of the liquid crystal cell 2.

As shown in FIG. 6, the frame 4 is substantially box-shaped, and has a plurality of side portions 21a, 21b, 21c, 21d, and 21e. The side portions 21a, 21b, 21c, 21d, and 21e of the box-shaped frame 4 are connected to a supporting member 22. The frame 4 has a sloped part 23 formed in a part thereof along the sloped portion 18 of the frame body 3 as seen from the top face side thereof. The sloped part 23 of the frame 4 also serves as its side portion. Between the side portion 21 c and the side portion 2 1 d of the frame 4, a flat portion 24 having no side portion is formed. The side portion 21a of the frame 4 has formed therein a hole 25a, and the side portion 21b has formed therein holes 25b and 25c. Likewise, the side portion 21c of the frame 4 has formed therein a hole 25d, and the side portion 21d of the frame 4 has formed therein a hole 25e. The side portion 21e of the frame 4 has formed therein holes 25f and 25g.

Though not shown in the figures, the light source 6 is built with a light guide plate, a plurality of LEDs, a circuit substrate, a reflecting sheet, and the like. The plurality of LEDs are fixed to the circuit substrate, and are placed inside the corresponding recesses formed in the light guide plate. The reflecting sheet is provided in such a way as to cover the side and bottom faces of the light guide plate. With this construction, the light emitted from the LEDs passes through the light guide plate, is then reflected by the reflecting sheet, and is then made to illuminate the back face of the liquid crystal cell 2 via the opening 20 of the frame 4.

Next, with reference to FIGS. 1 to 6, an assembled liquid crystal display device 1 will be described.

As shown in FIGS. 2 and 4, the liquid crystal cell 2 (to be precise, the back face of the first insulating substrate 7) is mounted on the top face of the supporting member 22 and the flat portion 24 formed in the frame 4. That is, the liquid crystal cell 2 is supported by the frame 4.

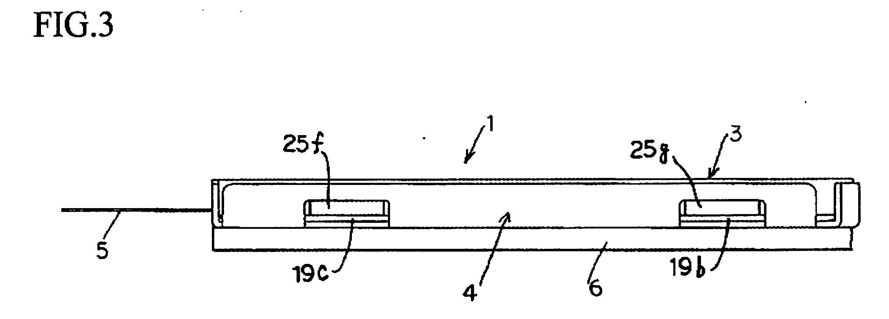

As shown in FIGS. 2 and 3, the frame body 3 is disposed in such a way as to cover the top face of the liquid crystal cell 2. When the liquid crystal cell 2 is placed inside the frame body 3, four side faces of the second insulating substrate 8 of the liquid crystal cell 2 make contact with the plurality of ribs 15a to 15h formed in the frame body 3. The protrusions 19a, 19b, 19c, 19d, 19e, 19f, and 19g formed in the frame body 3 are inserted into the holes 25a, 25b, 25c, 25d, 25e, 25f, and 25g formed in the frame 4, respectively. In this way, the frame 4 is fixed to the frame body 3.

As shown in FIG. 2, the one end of the FPC board 5 is connected near the edge of the liquid crystal cell 2. As shown in FIG. 1, the other end of the FPC board 5 is disposed outside of the frame body 3 and the frame 4. That is, the other end of the FPC board 5 is exposed. Furthermore, a predetermined part at the one end of the FPC board 5 is disposed between the low height portion 17 formed in the frame body 3 and the flat portion 24 formed in the frame 4.

As shown in FIG. 1, a label 26 is affixed to a predetermined part of an exposed region of the FPC board 5. The label 26 is made of, for example, paper, plastic film, or the like, and has an adhesive on the reverse side thereof. Moreover, the label 26 indicates, for example, a model number or a lot number of the liquid crystal display device 1.

The light source 6 is fixed to the back face of the frame 4 with an adhesive or the like. It is to be noted that the light source 6 may be supported by a supporting body (not shown) fixed to the frame 4.

Now, the liquid crystal display device 1 has the following seven features. A first feature is as follows. The liquid crystal display device 1 is provided with: the liquid crystal cell 2; the frame body 3 that is made of resin and is so disposed as to cover the top face of the liquid crystal cell 2, that has the opening 11 so formed as to face the top face of the liquid crystal cell 2, and that has the picture frame-shaped member 12 formed around the opening 11; the frame 4 that is fixed to the frame body 3, that has the opening 20 so formed as to face the back face of the liquid crystal cell 2, and that supports the liquid crystal cell 2; and the light source 6 that illuminates the liquid crystal cell 2 via the opening 20 of the frame 4. The top face of the picture frame-shaped member 12 of the frame body 3 is so designed that light is diffusely reflected therefrom.

A second feature is as follows. The opening 11 of the frame body 3 has the inclined planes 13a to 13d formed in such a way that the opening 11 becomes gradually larger from the back face toward the top face of the frame body 3, and the inclined planes 13a to 13d of the opening 11 of the frame body 3 are so designed that external light is diffusely reflected therefrom.

A third feature is as follows. Grain finish is applied to the top face of the picture frame-shaped member 12 of the frame body 3 and to the inclined planes 13a to 13d of the opening 11 of the frame body 3, such that diffusely reflecting surfaces are formed therein.

A fourth feature is as follows. The liquid crystal display device 1 is further provided with the FPC board 5 that is connected, at one end thereof, near the edge of the liquid crystal cell 2 and is exposed, at the other end thereof, outside of the frame body 3 and the frame 4. The label 26 is affixed to a predetermined part of the exposed region of the FPC board 5.

A fifth feature is as follows. The frame body 3 having the opening 11 is substantially box-shaped, and has the side portions 14a to 14d. The side portions 14a to 14d of the box-shaped frame body 3 have a plurality of ribs 15a to 15h formed on the inner faces thereof in such a way that they protrude inward and are disposed at a distance from each other. The plurality of ribs 15a to 15h of the frame body 3 are made to make contact with the side faces of the liquid crystal cell 2, whereby the liquid crystal cell 2 is placed inside the frame body 3.

A sixth feature is as follows. The low height portion 17 is formed in the side portion 14c of the frame body 3, and the flat portion 24 is formed between the side portion 21 c and the side portion 21d of the frame 4. Moreover, the one end of the FPC board 5 is connected near the edge of the liquid crystal cell 2. A predetermined part at the one end of the FPC board 5 is disposed between the low height portion 17 formed in the frame body 3 and the flat portion 24 formed in the frame 4.

A seventh feature is as follows. In part of the side portion 14a of the frame body 3, the sloped portion 18 is formed that is sloped as seen from the top face side of the frame body 3. The frame 4 has the sloped part 23 formed in a part thereof along the sloped portion 18 of the frame body 3 as seen from the top face side thereof.

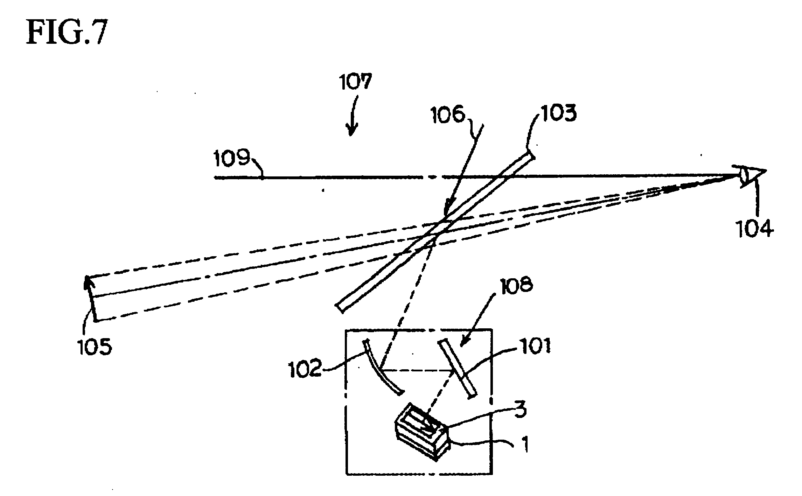

Next, with reference to FIG. 7, a head-up display 107 using the liquid crystal display device 1 will be described. The head-up display 107 is built with the liquid crystal display device 1, an optical component 108, a combiner 103, and the like.

The FPC board 5 of the liquid crystal display device 1 is connected, for example, to a car navigation system (not shown). The car navigation system described above transmits to the liquid crystal display device 1, for example, a display signal for displaying on a map an arrow (see FIG. 7) corresponding to a traveling direction in which an automobile should travel.

The optical component 108 is composed of the plane mirror 101, the concave mirror 102, and the like. The optical component 108 changes the traveling direction of a displayed image (e.g. an arrow) generated by the liquid crystal display device 1, and focuses light.

The combiner 103 is a transmissive item that is attached, for example, to the windshield of the automobile. The combiner 103 has the function of reflecting a displayed image from the optical component 108 and delivering it to the viewer 104. This makes it possible for the viewer 104 to view via the combiner 103 a virtual image 105 displayed in the front visual field.

While driving, the viewer 104 is generally observing a distant object with an eye fixed on a lower position relative to a horizon 109. Therefore, it is preferable to set the position of the virtual image 105 at a slightly lower position relative to the horizon 109. This allows the viewer 104 to visually identify, with the virtual image 105, the traveling direction in which the automobile should travel.

Here, assume that external light 106 (sunlight) enters from a direction indicated by an arrow shown in FIG. 7. Then, the external light 106 passes through the combiner 103, is then reflected by the concave mirror 102 and the plane mirror 101, and then reaches the liquid crystal display device 1. The light that has reached the liquid crystal display device 1 is diffusely reflected at different angles from the diffusely reflecting surfaces formed in the top face of the picture frame-shaped member 12 of the liquid crystal display device 1 and the inclined planes 13a to 13d of the opening 11. This drastically reduces the amount of reflected light that reaches the viewer 104 via the plane mirror 101, the concave mirror 102, and the combiner 103. This helps prevent the virtual image 105 corresponding to the picture frame-shaped member 12 of the frame body 3 from being visually identified, and thereby achieve a clear virtual image 105.

## Claims

1. A liquid crystal display device (1) comprising:
a liquid crystal cell (2);
a frame body (3) that is made of resin and is so disposed as to cover a top face of the liquid crystal cell, that has a first opening (11) so formed as to face the top face of the liquid crystal cell, and that has a picture frame-shaped member (12) formed around the first opening;
a frame (4) that is fixed to the frame body, that has a second opening (20) so formed as to face a back face of the liquid crystal cell, and that supports the liquid crystal cell; and
a light source (6) that illuminates the liquid crystal cell via the second opening of the frame,
**characterized in that** a top face of the picture frame-shaped member of the frame body is so designed that light is diffusely reflected therefrom.

2. The liquid crystal display device of claim 1, **characterized in that**:
the first opening of the frame body has inclined planes (13a, 13b, 13c, 13d) formed in such a way that the first opening becomes gradually larger from a back face toward a top face of the frame body, and
the inclined planes of the first opening of the frame body are so designed that light is diffusely reflected therefrom.

3. The liquid crystal display device of claim 2, **characterized in that**:
grain finish is applied to the top face of the picture frame-shaped member of the frame body and to the inclined planes of the first opening of the frame body, such that diffusely reflecting surfaces are formed therein.

4. The liquid crystal display device of claim 1, further comprising:
a flexible printed circuit board (5) that is connected, at one end thereof, near an edge of the liquid crystal cell and is exposed, at another end thereof, outside of the frame body and the frame,
**characterized in that** a label (26) is affixed to a predetermined part of an exposed region of the flexible printed circuit board.

5. The liquid crystal display device of claim 1, **characterized in that**:
the frame is made of metal.

6. A head-up display (107) comprising:
a liquid crystal display device (1);
an optical component (108) that changes a traveling direction of a displayed image generated by the liquid crystal display device; and
a combiner (103) that reflects the displayed image from the optical component and displays a virtual image (105),
**characterized in that**:
the liquid crystal display device includes
a liquid crystal cell (2),
a frame body (3) that is made of resin and is so disposed as to cover a top face of the liquid crystal cell, that has a first opening (11) so formed as to face the top face of the liquid crystal cell, and that has a picture frame-shaped member (12) formed around the first opening,
a frame (4) that is fixed to the frame body, that has a second opening (20) so formed as to face a back face of the liquid crystal cell, and that supports the liquid crystal cell, and
a light source (6) that illuminates the liquid crystal cell via the second opening of the frame, and
a top face of the picture frame-shaped member of the frame body is so designed that light is diffusely reflected therefrom.

7. The head-up display of claim 6, **characterized in that**:
the first opening of the frame body has inclined planes (13a, 13b, 13c, 13d) formed in such a way that the first opening becomes gradually larger from a back face toward a top face of the frame body, and
the inclined planes of the first opening of the frame body are so designed that light is diffusely reflected therefrom.

8. The head-up display of claim 7, **characterized in that**:
grain finish is applied to the top face of the picture frame-shaped member of the frame body and to the inclined planes of the first opening of the frame body, such that diffusely reflecting surfaces are formed therein.

9. The head-up display of claim 6, **characterized in that**:
the liquid crystal display device further includes a flexible printed circuit board (5) that is connected, at one end thereof, near an edge of the liquid crystal cell and is exposed, at another end thereof, outside of the frame body and the frame, and
a label (26) is affixed to a predetermined part of an exposed region of the flexible printed circuit board.

10. The head-up display of claim 6, **characterized in that**:
the frame is made of metal.
